# EUROPEAN PATENT APPLICATION

(11) **EP 4 845 179 A1**
(43) Date of publication of application: **25.11.2026**
(21) Application number: 25177729.8
(22) Date of filing: 20.05.2025
(51) Int. Cl.: H04R 1/02, B60R 11/02, F21V 33/00, H04R 1/34, H04R 5/02

(54) **LOUDSPEAKER SYSTEM, LOUDSPEAKER ARRANGEMENT AND METHOD OF MANUFACTURING A LOUDSPEAKER SYSTEM**

(71) Applicant: Harman Becker Automotive Systems, Inc., Novi, MI 48377 (US)
(72) Inventor: JEPSEN, Henrik Kirkeby, 7830 Vinderup (DK)
(74) Representative: Maucher Jenkins Patent- und Rechtsanwälte Partnerschaft mbB

(57) **Abstract**

The invention relates to a loudspeaker system (1) intended to be integrated into a carrier, the carrier having an outwardly closing carrier surface, wherein the loudspeaker system comprises: a loudspeaker unit (2), a housing (3), an actuator (4) to be able to move at least a movable part of the system relative to a stationary part of the loudspeaker system and/or the carrier surface in the state where the loudspeaker system (1) is integrated in the carrier between a lower position and an upper position, wherein the loudspeaker system (1) comprises an illumination device (5) having at least one illumination source (6) for illuminating an area surrounding the loudspeaker system (1), wherein the illumination device (5) is movable relative to the stationary part of the loudspeaker system (1) and/or the carrier surface in the state where the loudspeaker system (1) is integrated into the carrier.

## Description

The invention relates to a loudspeaker system, loudspeaker arrangement and method of manufacturing a loudspeaker system.

### BACKGROUND OF THE INVENTION

Sound systems with loudspeakers, especially for playing music, are ubiquitous in everyday life. Modern loudspeaker systems, which can be found in vehicles for example, should not only provide the user with a special sound experience when listening to music, but should also be considered aesthetically pleasing. For example, loudspeaker systems can already be found in modern vehicles that are integrated as design elements into the overall design of the vehicle interior.

The invention is therefore intended to solve the problem of creating a loudspeaker system that not only provides a good sound experience for the user, but also has a design that is equally appealing to the user, while the actual function must remain unimpaired.

### SUMMARY

The present invention is defined in the independent claims. The dependent claims recite selected optional features.

In particular, the solution according to the invention relates to a loudspeaker system intended to be integrated into a carrier, wherein the carrier having an outwardly closing carrier surface,
wherein the loudspeaker system comprises:
   - a loudspeaker unit,
   - a housing,
characterized in that
the loudspeaker system comprises an illumination device having at least one illumination source for illuminating an area surrounding the loudspeaker system. In addition to a special sound experience and the creation of sound effects, users can also be presented with lighting effects. The illumination device makes it possible for the user to be shown visual lighting effects in addition to a sophisticated sound experience. Optionally, the visual lighting effects can be adapted to the sound played by the loudspeaker unit. It is also possible for the loudspeaker system to play a welcome signal to a user after starting the system and/or after entering a vehicle, for example by means of visual and/or acoustic effects.

The housing may comprise all parts that serve to carry and/or fasten the functional elements, such as the illumination device, light guide, circuit board, etc. It can also include a fastening interface, which is provided for fastening the loudspeaker system to the carrier. The illumination device can include all optical elements required for generation and/or light transmission and/or emission.

In particular, the solution according to the invention relates to a loudspeaker system intended to be integrated into a carrier, wherein the carrier having an outwardly closing carrier surface,
wherein the loudspeaker system comprises:
   - a loudspeaker unit,
   - a housing,
   - an actuator to be able to move at least a movable part of the system relative to a stationary part of the loudspeaker system and/or the carrier surface in the state where the loudspeaker system is integrated in the carrier between a lower position and an upper position, characterized in that
the loudspeaker system comprises an illumination device having at least one illumination source for illuminating an area surrounding the loudspeaker system,
wherein the illumination device is movable relative to the stationary part of the loudspeaker system and/or the carrier surface in the state where the loudspeaker system is integrated into the carrier.

When not in use, the loudspeaker system can be retracted so that it does not protrude from the carrier surface and is therefore not or hardly noticeable to the user. The height of the loudspeaker system can therefore be adjusted in relation to the carrier surface. The top of the loudspeaker system thus closes the carrier surface when retracted, creating an image of a uniformly designed, closed surface. As soon as a user wants to use the loudspeaker system to listen to music, it is moved into an extended operating position relative to the carrier surface.

Advantageous further embodiments of the invention are described below, which can optionally be combined with the features according to claim 1.

The illumination device may comprise a light guide, which is integrated into a lid of the housing that shields the area above the lid from illumination by the illumination device. This has the advantage of preventing or for the most part preventing light from being emitted upwards, so that when the loudspeaker system is used near a reflective surface, such as a car windshield, the light emitted by the illumination device is not reflected in a way that is disturbing for the user.

The illumination device may comprise a light distribution body. This may be connected to the light guide in a light-conducting manner. The light distribution body makes it possible to achieve particularly good illumination of the area surrounding the loudspeaker system. In particular, it can be designed so that it is cylindrical on the outer circumference. Alternatively or additionally, the light distribution body can be designed to emit light essentially in a radial direction.

The light guide may have a light-conducting fastening means which serves to fasten the light guide to a corresponding mating fastening part of the housing. For example, the light-conducting fastening means can be created as a bayonet element and the corresponding mating fastening part can be a corresponding mating groove or vice versa. The light-conducting fastening means can also be a central light-conducting mixing rod, which is described in detail below. This design enables the light guide to be optimally aligned relative to the illumination source with minimal manufacturing tolerances, as the position of the light guide and illumination source in relation to each other is influenced by the precise positioning of the light guide on the illumination unit. Since the light guide itself comprises a fastening means, in particular in one piece, preferably monolithically made of the same material as the rest of the light guide, optimum alignment can be achieved.

The loudspeaker may include a second actuator to be able to rotate at least a movable part relative to a stationary part of the loudspeaker system, in particular to rotate at least the movable part relative to to the carrier surface in the state where the loudspeaker system is integrated in the carrier, in particular wherein the second actuator comprises a pinion drive.

This enables a solution that requires little installation space and allows stepless rotation in particular. The first actuator can be used to achieve linear, in particular stepless adjustment between the retracted and extended positions.

The movable part of the loudspeaker system may comprise at least the housing, the loudspeaker unit and the illumination device and the stationary part may comprise a mounting interface for attaching the loudspeaker system to the carrier and/or the first actuator, in particular wherein the movable part also comprises the second actuator.

The at least one illumination source and the light-conducting fastening means of the light guide are aligned with each other in a stack. **In** particular the at least one illumination source and the light-conducting fastening means of the light guide are arranged centrally in the loudspeaker system. This enables optimum light transmission into the light guide.

The housing may comprise a cone chassis for distributing the sound from the loudspeaker unit and a cave chassis for carrying the loudspeaker unit, in particular wherein the cone chassis is placed on the cave chassis. The loudspeaker unit is attached to the cave chassis, which spreads the sound via an opening of the cave chassis and/or an opening of the light distribution body.

The light guide may be formed like a disk that directs the light from the illumination source in different directions. **In** particular it may be formed that the light guide has an almost omnidirectional light distribution with the exception of an area in which at least one opening is formed in the light guide for fastening the light guide to the lid, in particular wherein the beam angle of the light guide is at least 340 degrees, in particular at least 345 degrees. This enables the development of a particularly sophisticated play of light.

The edges of the lid may be directed downwards, so that no light or almost no light is emitted in a radial direction from the light guide, but the light is directed completely or essentially into the light distribution body. This has the advantage that there is little or no unwanted stray light that could disturb the overall visual impression. The light guide has an outer chamfer (prism) that reflects the light downwards. **In** particular, the light guide allows total internal reflection (TIR). The edge of the lid may comprise an undercut to fix the light guide. Particularly, the undercut may axially fix the light guide.

The light guide may have a central reflection zone, for example formed as a prism, to split light emitted by the at least one illumination source omnidirectionally. The reflection zone may reflect the impinging light in a 90 degree angle to transfer it in the edge area of the light guide from where it is further reflected and transferred into the light distribution body. The light distribution body may surround the light-conducting fastening means and/or the central light-conducting mixing rod. **In** particular, the light distribution body may be arranged at least partly concentrically around the illumination source and/or the light-conducting fastening means and/or the central light-conducting mixing rod. This arrangement allows the most compact assembly possible.

The light distribution body may have a coating and/or a laser engraving and/or facets and/or a structured surface on its outside and/or inside. The light distribution body may have a coating on its underside, in particular a reflective coating. The structured surface may be produced in different ways. For example, it can be produced by indentations on the outside and/or inside, e.g. grooves. It is also possible that cavities are formed in the light distribution body. The surface of the light distribution body can also be matt. All of the features described above can be used to create different lighting effects. It is therefore also possible for combinations of the features described above to be used to form the light distribution body, depending on which lighting effects are to be created.

The inside of the light distribution body can form a conical and/or frustoconical receiving space. The cone chassis can be accommodated in this receiving space, whereby the cone chassis can be at least partially fitting, in particular conical and/or frustoconical.

The light guide may have a central light-conducting mixing rod, which receives the light from the illumination source and directs it into the body, in particular the disk-shaped body of the light guide.

The light guide may comprise at least one anti-twist element, which interacts with other parts, in particular of the housing, to prevent an unwanted relative movement, so the light guide is kept in its position. The anti-twist element can, for example, be positioned against a stop to prevent the light guide and/or the lid from twisting.

The invention further relates to a loudspeaker arrangement comprising a loudspeaker system as described herein and a carrier, wherein the top of the lid creates a closed surface with the carrier surface, when the loudspeaker system is in the retracted state and wherein at least a portion of the movable part protrudes beyond the carrier surface of the carrier when the loudspeaker system is in the extended state, wherein only in the extended state an illumination of the environment of the loudspeaker system by the illumination device is possible. This makes it possible to create an arrangement whose function has been extended to be able to create visual effects in addition to a special sound experience for a user.

For example, the carrier may be designed as the dashboard of a vehicle. With the design described above, it is possible to further develop the interior of the vehicle stylistically with additional functions, without affecting existing functions. In addition, the solution according to the invention prevents unwanted reflections in the windshield, for example, which could distract the driver. It therefore does not impair driving safety when it is in operation while driving.

The invention further relates to a method of manufacturing a loudspeaker system as described herein, wherein a guiding pin of the lid is inserted into a corresponding opening of the light guide, attaching the illumination device to a bracket of the housing and the cone chassis, then the light guide is attached to the bracket of the housing by fixing the light-conducting fastening means to a corresponding mating fastening part of the bracket. This type of manufacturing makes it possible to reduce production tolerances as much as possible so that the light-conducting elements can be aligned with the illumination source with high precision.

### BRIEF DESCRIPTION OF THE DRAWINGS

Fig. 1 shows a sectional view of a possible embodiment of the invention, whereby only the movable part is shown here without the first actuator;
Fig. 2 shows an exploded view of the embodiment in Fig. 1 of the loudspeaker system with the first actuator drawn in schematic form;
Fig. 3-5 show the sequence of steps for mounting the light guide in the lid of the housing;
Fig. 6 shows a sectional view of the lid and the light guide, wherein the fastening means is a tulip clip;
Fig. 7 shows the beam angle of the light guide, which is only interrupted by the openings, arranged on a line to minimize the negative impact on illumination effect.

### DETAILED DESCRIPTION OF EXEMPLARY EMBODIMENTS

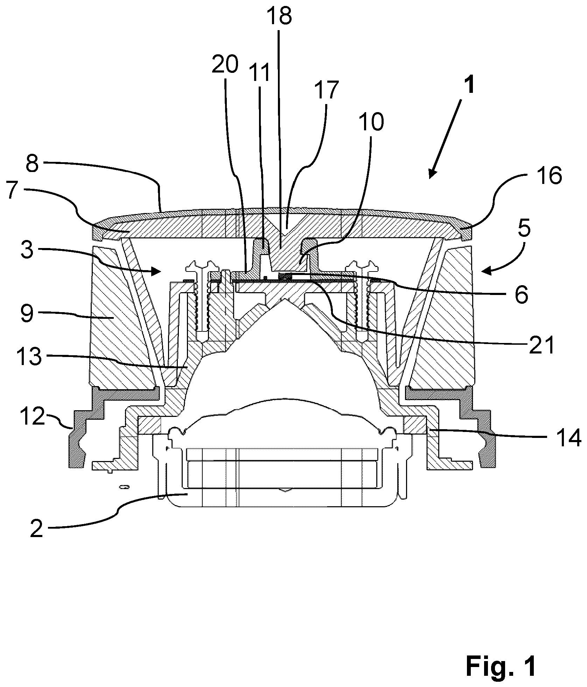

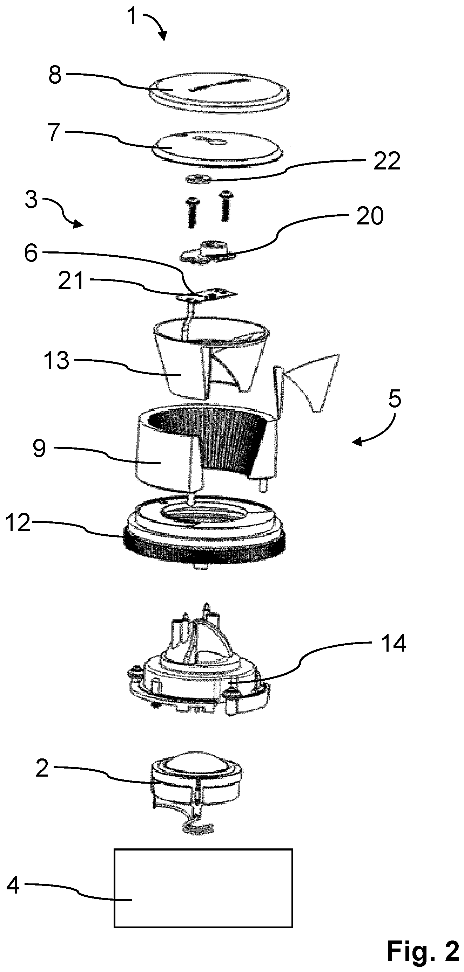

Figs. 1 and 2 show a possible embodiment of the loudspeaker system according to the invention, whereby the invention is not limited to the variant shown.

The loudspeaker system 1 can, for example, be installed as part of a sound system in a vehicle, with a part of the vehicle then serving as the carrier of the loudspeaker system 1. The carrier itself is not part of the loudspeaker system 1.

In contrast, the loudspeaker arrangement according to the invention also comprises the carrier in addition to the loudspeaker system 1. In the case of installation in a vehicle, the carrier can, for example, be designed as a dashboard or as part of the dashboard.

The loudspeaker system 1 provides a good sound experience and allows to create visual effect without negatively influencing the function of the loudspeaker system 1 in terms of sound spreading, as the illumination device 5 is integrated into the housing 3 in such a way that the smallest possible installation space is required. To generate a sound, the loudspeaker system 1 comprises at least one loudspeaker unit 2. The loudspeaker unit 2 can, for example, be designed as a tweeter as shown in Figs. 1 and 2.

The loudspeaker system 1 is designed to be adjusted between at least two end positions, a retracted position and an extended position. This adjustment is implemented using a first actuator 4. The first actuator 4 can be designed as a linear drive. In particular, it can be a spindle drive.

The loudspeaker system 1 comprises an illumination device 5 having at least one illumination source 6 for illuminating an area surrounding the loudspeaker system 1. The illumination source 6 can, for example, be designed as a light-emitting diode (LED). In particular, the illumination source 6 can be designed so that several different colors, i.e. light of different wavelengths or wavelength ranges and/or white light, can be set. The illumination source 6 can be arranged on a circuit board 21 located inside the housing 3. The housing 3 can consist of several parts, for example for attaching functional elements of the loudspeaker system 1 and for shielding them from the outside by enclosing them in it.

The loudspeaker system 1 comprises a movable part and a stationary part, which can be adjusted relative to each other by means of the first actuator 4 and/or a second actuator 12. The stationary part is designed to be firmly connected to the carrier. For this reason, it has at least one mounting interface.

The illumination device 5 is movable together with the movable part, in particular as part of the movable part, relative to the stationary part of the loudspeaker system 1 and/or a carrier surface in the state where the loudspeaker system 1 is integrated into the carrier. In the retracted position of non-use, the illumination device 5 can therefore be hidden so that it is not visible and/or cannot be used to illuminate the surroundings.

The illumination device 5 comprises a light guide 7 with which light is guided from the illumination source 6 to an exit point of the light from the loudspeaker system 1. The light guide 7 of the shown embodiment is integrated into a lid 8 of the housing 3 that shields the area above the lid 8 from illumination by the illumination device 5. When installed in a vehicle, e.g. in the dashboard, the lid can prevent unwanted reflections in the windshield that could disturb the user.

The light guide 7 comprises at least one anti-twist element 23, which interacts with other parts, in particular of the housing 3, to prevent an unwanted relative movement, so the light guide 7 is kept in its position. The anti-twist element 23 can, for example, be positioned against a stop to prevent the light guide 7 and/or the lid 8 from twisting.

The loudspeaker system 1 comprises a light distribution body 9. The light distribution body 9 can be made of glass and/or plastics. It is integrated into the housing 3 in such a way that the upper part of the loudspeaker system 1, which is visible when installed onto a carrier, has an essentially cylindrical shape. The light distribution body 9 enables particularly good illumination of the surroundings, as a wide beam is possible. In particular, the entire or almost the entire outward-facing surface of the light distribution body 9 can emit light outwards, resulting in a particularly large beam cone.

The light guide 7 has a light-conducting fastening means 10 which serves to fasten the light guide 7 to a corresponding mating fastening part 11 of the housing 3, which is here provided by bracket 20. The light-conducting fastening means 10 of the embodiments shown in Fig. 1 and 2 is a bayonet element and the corresponding mating fastening part 11 is a corresponding mating groove. Both parts together create a bayonet mount. The bayonet element is connected to or built as an integral part of a light-conducting mixing rod 18, which absorbs the light of the illumination source 6 and directs it into the body of the light guide 7. Due to the light-conducting design, it is possible to achieve a particularly precise alignment of the light guide 7 relative to the illumination source 6 as there is a double function for light transmission and mounting. The at least one illumination source 6 and the light-conducting fastening means 10 of the light guide 7 are thus aligned with each other in a stack, wherein the at least one illumination source 6 and the light-conducting fastening means 10 of the light guide 7 are arranged centrally in the loudspeaker system.

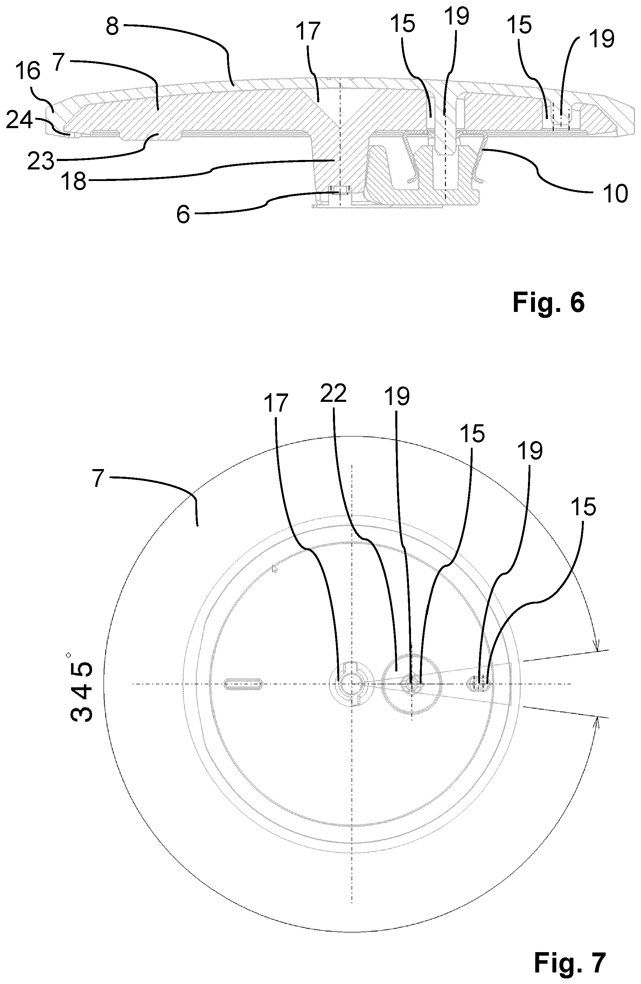

Fig. 6 shows an embodiment having a different fastening means, which is here a tulip clip. This alternative also includes a light-conducting mixing rod 18, which does not carry the fastening means, but which is responsible for light transmission coming from the at least one illumination source 6.

The loudspeaker system 1 has a second actuator 12 to rotate the movable part around an axis of rotation, in particular its own longitudinal axis. This actuator 12 and the other components of the movable part are adjusted by the first actuator 4. The second actuator 12 can comprise a pinion drive. The gear of the pinion drive can be designed as part of the housing 3, in particular the part on which the light distribution body 9 is mounted directly or indirectly. The gear can be driven directly via a motor-driven pinion, which causes the movable part to rotate.

The loudspeaker system can comprise a control unit that is set up to control the actuators 4, 12 and/or to control the illumination device 5. The control unit can, for example, be arranged on the previously mentioned circuit board.

The housing 3 further comprises a cone chassis 13 for distributing the sound from the loudspeaker unit 2 and a cave chassis 14 for carrying the loudspeaker unit 2, wherein the cone chassis 13 is directly or indirectly placed on the cave chassis 14.

The light guide 7 is formed as a disc that directs the light from the illumination source 6 in different directions. The light guide 7 has an almost omnidirectional light distribution except for an area in which at least one opening 15 is formed in the disc for fastening the light guide 7 to the lid 8 by a guiding pin 19. The beam angle of the light guide 7 comprises 345 degrees, as can be seen in Fig. 7. The light guide 7 has a central reflection zone 17, which is formed as a prism, to split light emitted by the at least one illumination source 6 omnidirectionally through the body of the light guide 7.

The edge 16 of the lid 8 is directed downwards, so that no light or almost no light is emitted from the light guide 7 in a radial direction of the light guide 7, but the light is directed completely or essentially into the light distribution body 9 below and/or attached to the light guide 7. The edge 16 of the lid comprises an undercut 24 to fix the light guide 7, in particularly to axially fix the light guide 7.

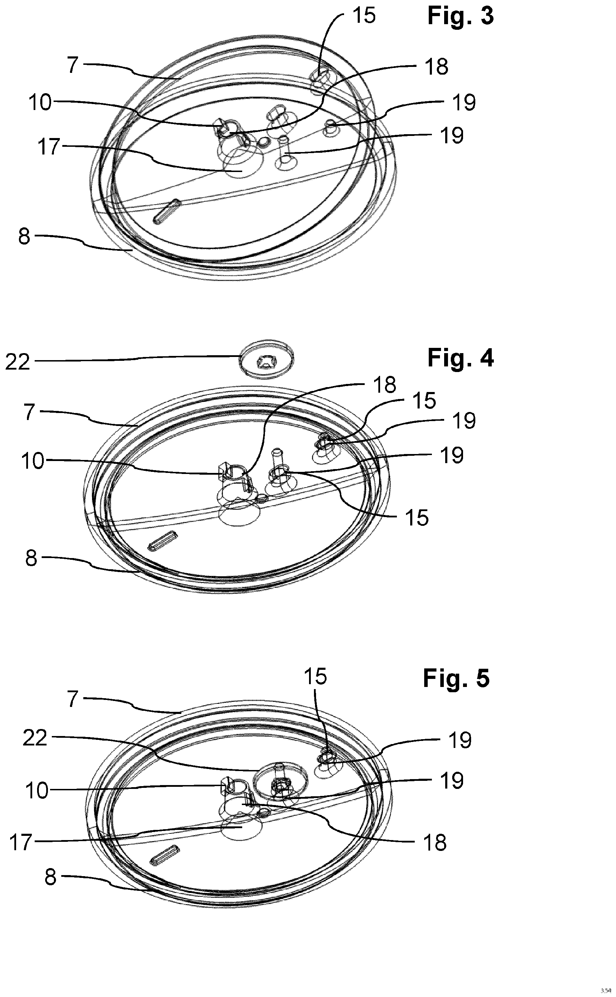

In Fig. 3-5 the assembly of the light guide 7 and the lid 8 is shown. The light guide 7 has openings 15 through which guiding pins 19 of the lid are inserted. By using a locking element 22, which is formed here as a clamping plate lid 8 and light guide 7 are fixed to each other.

The bracket 20 of the housing has a mating fastening part 11, in which the light-conducting fastening means 10 is inserted. As the bracket 20 also carries the illumination source 6 and/or the circuit board 21, all parts are precisely aligned with each other.

### LIST OF REFERENCE SYMBOLS

- 1: Loudspeaker system
- 2: Loudspeaker unit
- 3: Housing
- 4: First actuator
- 5: Illumination device
- 6: Illumination source
- 7: Light guide
- 8: Lid
- 9: Light distribution body
- 10: Fastening means
- 11: Mating fastening part
- 12: Second actuator
- 13: Cone chassis
- 14: Cave chassis
- 15: opening
- 16: Edge
- 17: Reflection zone
- 18: Light-conducting mixing rod
- 19: Guiding pin
- 20: Bracket
- 21: Circuit Board
- 22: Locking Element
- 23: Anti-twist Element
- 24: Undercut

## Claims

1. A loudspeaker system (1) intended to be integrated into a carrier, the carrier having an outwardly closing carrier surface, wherein the loudspeaker system comprises:
- a loudspeaker unit (2),
- a housing (3),
**characterized in that**
the loudspeaker system (1) comprises an illumination device (5) having at least one illumination source (6) for illuminating an area surrounding the loudspeaker system (1).

2. The loudspeaker system (1) according to claim 1, **characterized in that** it comprises an actuator (4) to be able to move at least a movable part of the loudspeaker system relative to a stationary part of the loudspeaker system and/or the carrier surface in the state where the loudspeaker system (1) is integrated in the carrier between a lower position and an upper position, wherein the illumination device (5) is movable relative to the stationary part of the loudspeaker system (1) and/or the carrier surface in the state where the loudspeaker system (1) is integrated into the carrier.

3. The loudspeaker system (1) according to claim 1 or 2, **characterized in that** the illumination device (5) comprises a light guide (7), which is integrated into a lid (8) of the housing (3) that shields the area above the lid (8) from illumination by the illumination device (5).

4. The loudspeaker system (1) according to any of the preceding claims, **characterized in that** the illumination device (5) comprises a light distribution body (9), in particular which is connected to the light guide (7) in a light-conducting manner.

5. The loudspeaker system (1) according to any of the preceding claims, **characterized in that** the light guide (7) has a light-conducting fastening means (10) which serves to fasten the light guide (7) to a corresponding mating fastening part (11) of the housing (3), in particular wherein the light-conducting fastening means (10) is a bayonet element and the corresponding mating fastening part (11) is a corresponding mating groove or vice versa.

6. The loudspeaker system (1) according to any of the preceding claims, **characterized in that** the loudspeaker system (1) includes a second actuator (12) to be able to rotate at least a movable part of the loudspeaker system (1) relative to the stationary part of the loudspeaker system (1) and/or the carrier surface in the state where the loudspeaker system (1) is integrated in the carrier, in particular wherein the second actuator (12) comprises a pinion drive.

7. The loudspeaker system (1) according to any of the preceding claims, **characterized in that** the movable part comprises at least the housing (3), the loudspeaker unit (2) and the illumination device (5) and the stationary part comprises a mounting interface for attaching the loudspeaker system (1) to the carrier, in particular wherein the movable part also comprises the second actuator (12).

8. The loudspeaker system (1) according to any of the preceding claims, **characterized in that** the at least one illumination source (6) and the light-conducting fastening means (10) of the light guide (7) are aligned with each other in a stack, in particular the at least one illumination source (6) and the light-conducting fastening means (10) of the light guide (7) are arranged centrally in the loudspeaker system (1).

9. The loudspeaker system (1) according to any of the preceding claims, **characterized in that** the housing (3) comprises a cone chassis (13) for distributing the sound from the loudspeaker unit (2) and a cave chassis (14) for carrying the loudspeaker unit (2), in particular wherein the cone chassis (13) is placed on the cave chassis (14).

10. The loudspeaker system (1) according to any of the preceding claims, **characterized in that** the light guide (7) is a disc that directs the light from the illumination source (6) in different directions, in particular that the light guide (7) has an almost omnidirectional light distribution with the exception of an area in which at least one opening (15) is formed for fastening the light guide (7) to the lid (8), in particular wherein the beam angle of the light guide (7) is at least 340 degrees.

11. The loudspeaker system (1) according to any of the preceding claims, **characterized in that** the light guide (7) has a central reflection zone (17), in particular a prism, to split light emitted by the at least one illumination source (6) omnidirectionally.

12. The loudspeaker system (1) according to any of the preceding claims, **characterized in that** the light guide (7) has a central light-conducting mixing rod (18), which receives the light from the illumination source (6) and directs it into the body of the light guide (7), in particular the disk-shaped body of the light guide (7).

13. A loudspeaker arrangement comprising a loudspeaker system (1) according to any of the preceding claims and a carrier, wherein the top of the lid (8) creates a closed surface with the carrier surface, when the loudspeaker system (1) is in the retracted state and wherein at least a portion of the movable part protrudes beyond the carrier surface of the carrier when the loudspeaker system (1) is in the extended state, wherein only in the extended state an illumination of the environment of the loudspeaker system (1) by the illumination device (5) is possible.

14. The loudspeaker arrangement of claim 13, wherein the carrier is designed as the dashboard of a vehicle.

15. Method of manufacturing a loudspeaker system (1) according to any of the preceding claims, wherein a guiding pin (19) of the lid (8) is inserted into a corresponding opening (15) of the light guide (7), attaching the illumination source (6) to a bracket (20) of the housing (3) and the cone chassis (13), then the light guide (7) is attached to the bracket (20) of the housing (3) by fixing the light-conducting fastening means (10) to a corresponding mating fastening part (11) of the bracket (20).
